# EUROPEAN PATENT SPECIFICATION

(11) **EP 3 070 576 B1**
(45) Date of publication and mention of the grant of the patent: **05.09.2018**
(21) Application number: 16157372.0
(22) Date of filing: 25.02.2016
(51) Int. Cl.: G06F 3/0482, G04G 21/00, G06F 3/01, G06F 3/0481, H04M 1/725, G06F 3/0362, G06F 1/16

(54) **METHOD AND APPARATUS FOR ACTIVATING APPLICATIONS BASED ON ROTATION INPUT**
VERFAHREN UND VORRICHTUNG ZUR AKTIVIERUNG VON ANWENDUNGEN AUF BASIS VON ROTATIONSEINGABE
PROCÉDÉ ET APPAREIL POUR ACTIVER DES APPLICATIONS SUR LA BASE D'UNE ENTRÉE DE ROTATION

(30) Priority: 27.02.2015 KR 20150028126
(43) Date of publication of application: 21.09.2016
(73) Proprietor: Samsung Electronics Co., Ltd., Gyeonggi-do 16677 (KR)
(72) Inventor: YOO, Sung Sik, Gyeonggi-do 16881 (KR); YU, Yong Ju, Gyeonggi-do 08725 (KR); KIM (Ms.), Seul A, Seoul 08104 (KR); LEE, Myung Hwan, Seoul 06277 (KR)
(74) Representative: Grootscholten, Johannes A.M.

(56) References cited:
- EP-A1- 2 306 273
- JP-A- 2007 082 151
- US-A1- 2003 103 032
- US-A1- 2005 268 251
- US-A1- 2011 195 754

## Description

### BACKGROUND OF THE INVENTION

### 1. Field of the Invention

The present disclosure relates to a technology for providing a user interface in an electronic device, and more particularly, to a method for activating an application based on a rotation input and an electronic device performing the same.

### 2. Background of the Invention

Some relatively recently developed electronic devices are portable smartphones and wearable devices that are attachable to body parts of users. Such electronic devices may provide various functions according to installed application programs. Application programs may be installed on or uninstalled from the electronic devices as necessary by users, and switching between the application programs may be performed with ease. Due to such characteristics of application programs, the usability of the electronic devices is maximized.

The electronic devices may be provided with a user input means for receiving an input from a user. The user input means may be implemented as a display that includes a touch panel. However, the display for an electronic device is limited in size to allow ease of handling and portability. Therefore, the limited size of the display may cause an unintended input to the display or may provide an inconvenient input environment for a user. Additionally or alternatively, reference is made to prior art publications US 2003/103032 A1 and US 2011/195754 A1, which independently disclose a rotary input device for which different applications can be triggered upon reception of rotary input corresponding to specific rotation angles.

### SUMMARY OF THE INVENTION

The present invention is defined by the independent claims. The dependent claims define further advantageous embodiments.

It must be understood that any reference along this description to an "embodiment" points to an alternative aspect related to the invention but does not necessarily correspond to a real realisation of it. The actual embodiments of the invention are defined by the appended claims which have basis only on specific realisations of the description.

Other aspects, advantages, and salient features of the disclosure will become apparent to those skilled in the art from the following detailed description, which, taken in conjunction with the annexed drawings, discloses various aspects of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates an environment in which an electronic device according to an embodiment of the present disclosure is used;
FIG. 2 illustrates an electronic device according to an embodiment of the present disclosure;
FIG. 3A illustrates angular difference range data according to an embodiment of the present disclosure;
FIG. 3B illustrates angular range data according to an embodiment of the present disclosure;
FIG. 3C illustrates angular data according to an embodiment of the present disclosure;
FIG. 4 illustrates a method of activating an application based on a rotation input according to an embodiment of the present disclosure;
FIG. 5A is a diagram for describing activation of an application according to an embodiment of the present disclosure;
FIG. 5B is a diagram for describing activation of an application according to another embodiment of the present disclosure;
FIG. 5C is a diagram for describing activation of an application according to another embodiment of the present disclosure;
FIG. 6 illustrates a method of setting an application to be activated according to an embodiment of the present disclosure;
FIG. 7 illustrates a screen for setting an angular difference range according to an embodiment of the present disclosure;
FIG. 8 illustrates a screen for setting an angular range according to an embodiment of the present disclosure; and
FIG. 9 illustrates a screen for setting a rotation angle according to an embodiment of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

Hereinafter, various embodiments of the present disclosure will be described in detail with reference to the accompanying drawings. However, it should be understood that the present disclosure is not limited to specific embodiments, but rather includes various modifications, equivalents and/or alternatives of various embodiments of the present disclosure. Regarding description of the drawings, like reference numerals may refer to like elements. The terms of a singular form may include plural forms unless otherwise specified.

The term "have," "may have," "include," "may include," "comprise," or the like used herein indicates the existence of a corresponding feature (e.g., a number, a function, an operation, or an element) and does not exclude the existence of an additional feature.

The expressions "A or B," "A and/or B" "at least one of A and/or B" or "one or more of A and/or B" may include all possible combinations of items listed together. These expressions may indicate all the cases of (1) including at least one A, (2) including at least one B, and (3) including at least one A and at least one B.

The expression "at least one of A and B" refers to A as a whole if A refers to a class of objects or a plurality of objects and B as a whole if B refers to a class of objects or a plurality of objects. For example, A may refer to L, M, and N, and B may refer to X, Y, and Z. Accordingly, "at least one of A and B" may refer to: 1) L, M, and N; 2) X, Y, and Z; or 3) L, M, N, X, Y, and Z. In each of the three cases, there may be one or more of each of L, M, N, X, Y, and Z as appropriate.

The term "first," "second" or the like used herein may modify various elements regardless of the order and/or priority, and does not limit the elements. For example, "a first user device" and "a second user device" may indicate different user devices regardless of the order or priority. Accordingly, without departing the scope of the present disclosure, a first element may be referred to as a second element and vice versa.

It will be understood that when a first element is referred to as being "operatively or communicatively coupled with/to" or "connected to" a second element, the first element may be coupled to the second element directly or via at least one other element (e.g., a third element). However, when the first element is referred to as being "directly coupled" or "directly connected" to the second element, it should be understood that there is no third element between the first element and the second element.

The expression "configured (or set) to" may be interchangeably used with expressions such as, for example, "suitable for," "having the capacity to," "designed to," "adapted to," "made to," or "capable of." The expression "configured (or set) to" may not necessarily have the meaning of "specifically designed to." In some cases, the expression "device configured to" may indicate that the device "may perform" together with other devices or components. For example, the term "processor configured (or set) to perform A, B, and C" may represent a dedicated processor (e.g., an embedded processor) for performing a corresponding operation, or a general-purpose processor (e.g., a CPU or an application processor) for executing at least one software program stored in a memory device to perform a corresponding operation.

The terminology used herein is only used for describing specific embodiments and is not intended to limit the scope of other embodiments. The terms used herein, including technical or scientific terms, have the same meanings as understood by those skilled in the art. Commonly-used terms defined in a dictionary may be interpreted as having meanings that are the same as or similar to contextual meanings defined in the related art. Generally, the terms defined herein should not be interpreted to exclude various embodiments of the present disclosure.

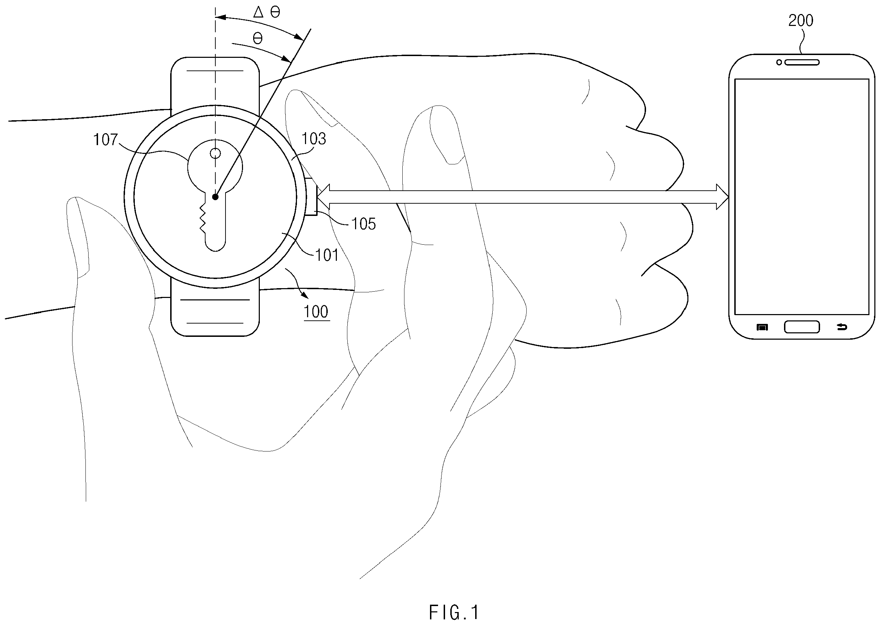

FIG. 1 illustrates an environment in which an electronic device according to an embodiment of the present disclosure is used.

Referring to FIG. 1, an electronic device 100 may be worn on a part of a body of a user. For example, the electronic device 100 may be a wrist watch-type device on a wrist or a wearable device able to be worn on a head, an arm, a leg, or another part of the body of the user. The electronic device 100 is described herein as a wrist watch-type device, i.e., a smart watch, but is not limited thereto.

The electronic device 100 may include a display 101 on which a screen is displayed according to an application, a bezel member 103 that surrounds the display 101 and is bidirectionally rotatable, and a button 105 that can be pressed by the user to enable execution of a specified function.

The electronic device 100 may activate a corresponding application program (hereinafter referred to as an "application" or "app") based on a rotation angle θ or an angular difference Δθ of a rotation input. The bezel member 103 may be rotated by an appropriate number of degrees to activate an application. A screen of an active application may be displayed on the display 101 of the electronic device 100 or a display of an electronic device 200. Upon receiving a predetermined input from the user, the electronic device 100 or 200 may provide to the user a preset function according to the active application.

For example, the electronic device 100 may activate a car key application based on an obtained rotation angle θ or angular difference Δθ of a rotation input. As the car key application is activated, an object 107 indicating the car key application may be displayed on the display 101. Thereafter, if the user selects (e.g., touches) the objects 107, the electronic device 100 may provide to the user a car door lock/unlock function by activating a built-in near field communication (NFC) module.

The button 105 may be used to display a home screen of the electronic device 100. For example, the above-mentioned operations of the electronic device 100 may be performed after the button 105 is pressed or after the button 105 is quickly pressed twice (or double clicked).

The electronic device 100 may be provided with a communication function and may interact with the electronic device 200 wirelessly or by wire. The electronic device 100 may transmit to the electronic device 200 a control message, data, etc. from an application. For example, the electronic device 100 may receive a predetermined input from the user, and may transmit to the electronic device 200 an execution command corresponding to the predetermined input.

The electronic device 200 may transmit to the electronic device 100 a control message, data, etc. generated by an application. For example, the electronic device 200 may transmit to the electronic device 100 setting information on an operation performed by the electronic device 100.

Herein, the electronic device 100 and the electronic device 200 are described as a wearable device and a smartphone, respectively, but are not limited thereto. For example, the electronic device 100 or 200 may be at least one of a smartphone, a tablet personal computer (PC), a mobile phone, a video telephone, an electronic book reader, a desktop PC, a laptop PC, a netbook computer, a personal digital assistant (PDA), a portable multimedia player (PMP), an MP3 player, a mobile medical device, a camera, an electronic apparel, an electronic bracelet, an electronic necklace, an electronic appcessory, an electronic tattoo, a smart mirror, and the like.

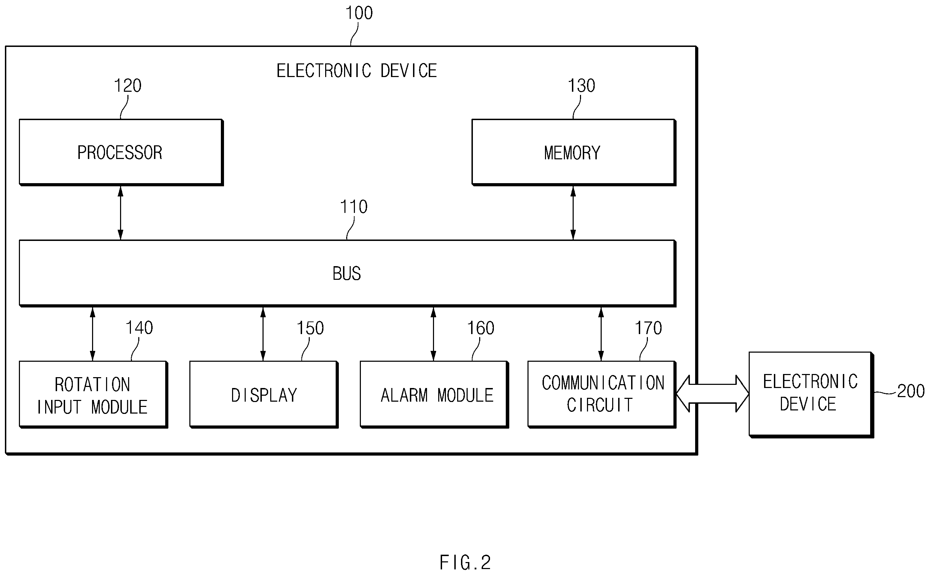

FIG. 2 illustrates an electronic device according to an embodiment of the present disclosure.

Referring to FIG. 2, the electronic device 100 according to an embodiment of the present disclosure, which activates an application based on a rotation input, may include a bus 110, a processor 120, a memory 130, a rotation input module 140, a display 150, an alarm module 160, and a communication circuit 170. In some various embodiments of the present disclosure, at least one of the foregoing elements may be omitted or other element(s) may be added to the electronic device 100.

The bus 110 may include a circuit for connecting the above-mentioned elements 120 to 170 to each other and transferring communications (e.g., control messages and/or data) among the above-mentioned elements.

The processor 120 may include at least one of a central processing unit (CPU), an application processor (AP), and/or a communication processor (CP). The processor 120 may perform data processing or an operation for communication and/or control of at least one of the other elements of the electronic device 100.

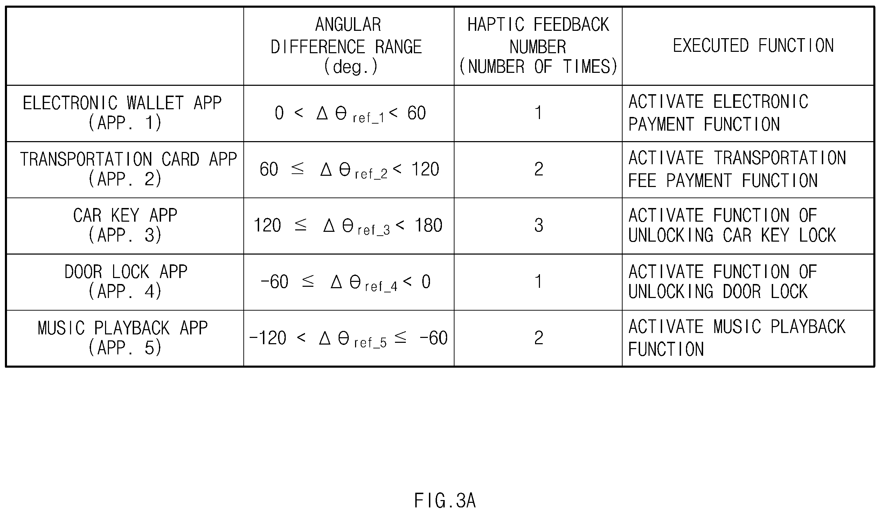

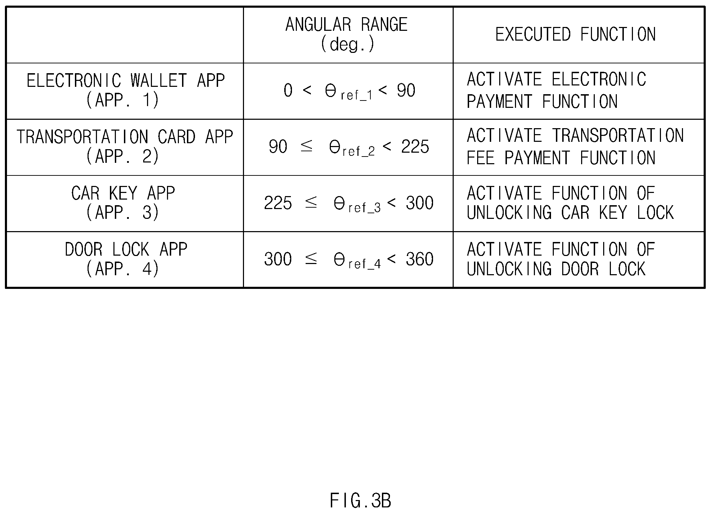

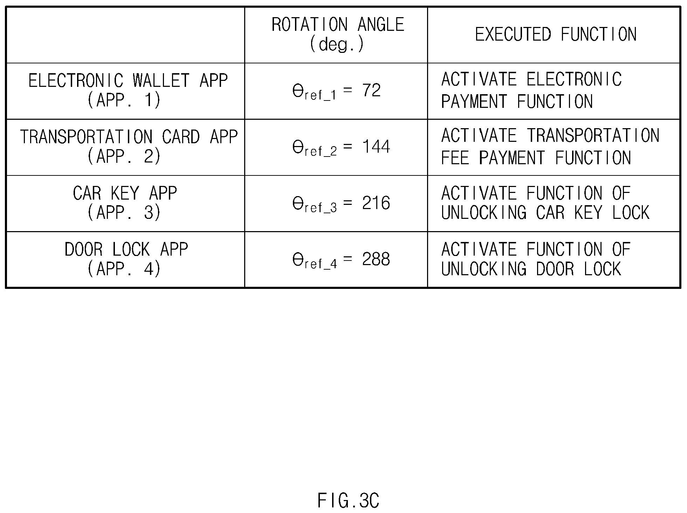

If the angular difference Δθ according to a rotation input corresponds to angular difference range data (e.g., Δθref of FIG. 3A) stored in the memory 130, the processor 120 may activate an application corresponding to the angular difference range data Δθref. There may be a plurality of angular difference range data. According to an embodiment of the present disclosure, if the rotation angle θ according to the rotation input corresponds to angular range data (e.g., θref of FIG. 3B) stored in the memory 130, the processor 120 may activate an application corresponding to the angular range data θref. There may be a plurality of angular range data. Furthermore, according to an embodiment of the present disclosure, if the rotation angle θ according to the rotation input corresponds to angular data (e.g., θref of FIG. 3C) stored in the memory 130, the processor 120 may activate an application corresponding to the angular data θref. There may be a plurality of angular data.

Furthermore, if a user input to the activated application is obtained, the processor 120 may generate an execution command caused by the activated application, where the execution command may be, for example, a preset execution command. For example, the user input to the application may be a touch input to an object (e.g., the object 107 of FIG. 1) of the activated application displayed on the display 150.

The memory 130 may include volatile memory and/or nonvolatile memory. The memory 130 may store instructions or data related to at least one of the other elements of the electronic device 100.

The memory 130 may store execution data for at least one application. Furthermore, the memory 130 may store any one of the angular data or the angular range data θref, and the angular difference range data Δθref for activating the application(s).

FIG. 3A illustrates angular difference range data according to an embodiment of the present disclosure.

Referring to FIG. 3A, angular difference range data Δθref_1 to Δθref_5 (collectively referred to as Δθref) according to an embodiment of the present disclosure may be stored in the memory 130 in association with an application to be activated, a haptic feedback number, and/or a function to be performed by the application to be activated.

For example, the angular difference range data Δθref may represent a range of variation of an angle by which the rotation input module 140 is rotated about the origin at the center of the display 150. A positive value of the angular difference range data Δθref may indicate clockwise rotation, and a negative value of the angular difference range data Δθref may indicate counterclockwise rotation. The angular difference range data Δθref may not overlap with each other with respect to applications corresponding thereto respectively, and may have an equal angular range for each application.

For example, referring to FIG. 3A, it may be understood that the angular difference range data Δθref_1 to Δθref_5 respectively for an electronic wallet app, a transportation card app, a car key app, a door lock app, and a music playback app do not overlap with each other and have an angular range of 60°. According to an embodiment of the present disclosure, the angular difference range data Δθref for each application may have angular range obtained by dividing a specified angle by the number of applications. In the case of the example of FIG. 3A, the specified angle may be 300°, and the number of applications may be five. If the specified angle is 300° and the number of applications to be activated is three, each angular difference range data may have an angular range of 100°.

The haptic feedback number, which represents the number of times the rotation input module 140 provides a discrete haptic feedback to the user according to a rotation input, may be set based on the angular difference range data Δθref. For example, as illustrated in FIG. 3A, the haptic feedback may be provided at an interval of 60 degrees of the rotation input. The haptic feedback that may be provided by the rotation input module 140 will be described later.

An execution function corresponding to the angular difference range data Δθref may be a function activated or executed due to a corresponding application. For example, in the case where a rotation input received from the rotation input module 140 has a rotation variation of 48° clockwise (i.e., Δθ = 48°), the electronic wallet app (APP. 1) may be activated, which may enable a relevant module (e.g., an NFC module, a Wi-Fi module, or the like) for electronic payment. For another example, in the case where the rotation input received from the rotation input module 140 has a rotation variation of 55° counterclockwise (i.e., Δθ = -55°), the door lock app (APP. 4) may be activated, which may enable a relevant module (e.g., an NFC module, a Wi-Fi module, or the like) for locking/unlocking a door lock.

According to an embodiment of the present disclosure, the memory 130 may store the angular range data θref instead of the angular difference range data Δθref, in association with applications.

FIG. 3B illustrates angular range data according to an embodiment of the present disclosure.

Referring to FIG. 3B, the angular range data θref according to an embodiment of the present disclosure may be stored in the memory 130 in association with an application to be activated and/or a function to be performed by the application to be activated.

For example, the angular range data θref may represent a range of angles by which the rotation input module 140 is rotated clockwise about the center of the display 150 with respect to an orienting angle (e.g., an angle indicating a 12 o'clock direction from the center). The angular range data θref may not overlap with each other with respect to applications corresponding thereto respectively, and may have an equal or unequal range width for each application.

For example, referring to FIG. 3B, it may be understood that angular range data Δθref_1 to Δθref_4 respectively for an electronic wallet app, a transportation card app, a car key app, and a door lock app do not overlap with each other and have an unequal angular range (90°, 135°, 75°, and 60° respectively).

An execution function corresponding to the angular range data θref may be a function activated or executed due to a corresponding application. For example, in the case where a rotation input obtained from the rotation input module 140 has a rotation angle of 120° clockwise (i.e., θ = 120°), the transportation card app (APP. 2) may be activated, which may enable a relevant module (e.g., an NFC module, a Wi-Fi module, or the like) for transportation fee payment. Furthermore, in the case where the obtained rotation input has a rotation angle of 270° clockwise or -90° (i.e., θ = 270° or -90°), the car key app (APP. 3) may be activated, which may enable a relevant module (e.g., an NFC module, a Wi-Fi module, or the like) for locking/unlocking a car door.

Although not illustrated in FIG. 3B, the electronic device 100 may provide a discrete haptic feedback to the user in response to a rotation input to the rotation input module 140 as described above with reference to FIG. 3A. The number of times of the haptic feedback may be preset. For example, the number of times of the haptic feedback may be provided based on the angular range data (e.g., at an interval of 30 degrees of the rotation input).

FIG. 3C illustrates angular data according to an embodiment of the present disclosure.

Referring to FIG. 3C, the angular data θref according to an embodiment of the present disclosure may be stored in the memory 130 in association with an application to be activated and/or a function to be performed by the application to be activated, as described above with reference to FIG. 3B.

For example, the angular data θref may represent an angle by which the rotation input module 140 is rotated clockwise about the center of the display 150 with respect to an orienting angle (e.g., an angle indicating a 12 o'clock direction from the center). The angular data θref stored in the memory 130 may be set for each application to have an equal or unequal interval.

For example, referring to FIG. 3C, it may be understood that angular data Δθref_1 to Δθref_4 are respectively mapped to an electronic wallet app, a transportation card app, a car key app, and a door lock app at an equal interval of 72 degrees. As described above, the angular data θref may be set at an interval of a value obtained by dividing a specified angle (e.g., 360 degrees) by a value based on the number of mapped applications. In the case of the example of FIG. 3C, the angular data θref may be set at an equal interval of a value (360°/(4+1) = 72°) obtained by dividing 360 degrees by a value obtained by adding '1' to the number of applications (4).

The angular data θref is not limited to that illustrated in FIG. 3C. For example, the angular data θref may be set at an equal interval as multiples of a value obtained by dividing 360 degrees by the number of mapped applications. That is, in the case where the number of mapped applications is four, the angular data θref may be set at an interval of 90 degrees (= 360°/4). For example, the four applications may be mapped to 90 degrees, 180 degrees, 210 degrees, and 360 degrees respectively. The angle of 360 degrees, which corresponds to a general angle, may correspond to one clockwise revolution of the rotation input module 140. Furthermore, according to some various embodiments of the present disclosure, the four applications may be respectively mapped to 30 degrees, 120 (= 30+90×1) degrees, 210 (= 30+90×2) degrees, and 300 (= 30+90×3) degrees at an interval of 90 degrees based on a preset specific angle (30 degrees).

Moreover, the angular data θref may also be set at an interval of a value obtained by dividing 360 degrees by a value obtained by adding '2' to the number of mapped applications.

An execution function corresponding to each angular data θref may be a function activated or executed due to a corresponding application. For example, in the case where a rotation input obtained from the rotation input module 140 has a rotation angle of 144° clockwise or 216° counterclockwise (i.e., θ = 144° or -216°), the transportation card app (APP. 2) may be activated, which may enable a relevant module (e.g., an NFC module, a Wi-Fi module, or the like) for transportation fee payment. Furthermore, in the case where the obtained rotation input has a rotation angle of 72° counterclockwise or 288° clockwise (i.e., θ = -72° or 288°), the door lock app (APP. 4) may be activated, which may enable a relevant module (e.g., an NFC module, a Wi-Fi module, or the like) for locking/unlocking a door lock.

Regarding the example of FIG. 3C, it may be difficult to accurately match a rotation angle θ of a rotation input to the rotation input module 140 to the angular data θref stored in the memory 130. To overcome this limitation, the electronic device 100 may provide, to the user, a discrete haptic feedback at an interval of a predetermined angle. The number of times the discrete haptic feedback is provided at the interval of the predetermined angle may be set based on the angular data θref. Furthermore, if a rotation angle θ corresponding to a specific application is reached, a preset alarm may be provided to the user.

The angular difference range data Δθref of FIG. 3A, the angular range data θref of FIG. 3B, and the angular data θref of FIG. 3C are the same in that those data represent an angle (range) according to a rotation input to the rotation input module 140. However, in the case where the angular difference range data Δθref of FIG. 3A is stored in the memory 130, an angular difference Δθ of the rotation input to the rotation input module 140 may be compared and checked with the angular difference range data Δθref. In the case where the angular range data θref of FIG. 3B is stored in the memory 130, an angle (or angular displacement) θ of the rotation input to the rotation input module 140 with respect to a reference line may be compared and checked with the angular range data θref. In addition, in the case where the angular data θref of FIG. 3C is stored in the memory 130, the angle (or angular displacement) θ of the rotation input to the rotation input module 140 with respect to the reference line may be compared and checked with the angular data θref.

The rotation input module 140 may obtain a rotation input from the user. According to an embodiment of the present disclosure, the rotation input module 140 may be disposed so as to surround an outer perimeter of a display and may be rotatable with respect to a surficial center of the display 150 (of the display 101 of FIG. 1). The rotation input module 140 configured as described above may be referred to as a bezel member, and the rotation input may be obtained through rotation of the bezel member.

The rotation input module 140 (e.g., the bezel member 103 of FIG. 1) may provide a discrete haptic feedback to the user in response to rotation of the rotation input module 140. The number of times of the haptic feedback may be set based on the angular difference range data Δθref or the angular range data θref.

In order to provide the haptic feedback to the user, for example, physical protrusions may be arranged at an inner side (side of the display 150) of the rotation input module 140 (may be referred to as, for example, a bezel member, a rotary member, a rotary wheel, etc.) at an interval of a predetermined angle. The number of the protrusions may be related to the number of times of the haptic feedback provided when the rotation input occurs, and may be adjusted according to the number of times of the haptic feedback. For example, the rotation input module 140 may be provided with 12 protrusions arranged at an interval of 30 degrees, or may be provided with 60 protrusions arranged at an interval of six degrees like a typical watch. However, the number of the protrusions is not limited to the foregoing examples.

Mechanical stimulation generated by the protrusions may be provided as a haptic feedback to the user when the rotation input module 140 is rotated. According to an embodiment of the present disclosure, the rotation input module 140 may be rotated only in one direction (e.g., a clockwise direction or a counterclockwise direction), and, in this case, the physical protrusions may have a ratchet-detect structure. According to another embodiment of the present disclosure, the rotation input module 140 may have a magnetism-based haptic feedback support structure, without the physical protrusions.

The display 150 may present various content (e.g., a text, an image, a video, an icon, a symbol, or the like) to the user. For example, the display 150 may display a screen caused by an active application. The display 150 may have a circular or elliptical shape. In this case, a case coupled to the rotation input module 140 to support the display may also have a circular or elliptical shape. According to an embodiment of the present disclosure, the display 150 may also be implemented with a rectangular display mounted in a circular case.

The display 150 may include, for example, a liquid crystal display (LCD), a light-emitting diode (LED) display, an organic light-emitting diode (OLED) display, a microelectromechanical systems (MEMS) display, or an electronic paper display. In the case where the display 150 has a circular or elliptic shape, the display 150 may be implemented with an OLED display.

Furthermore, the display 150 may include a touch screen. The display 150 may receive, for example, a touch, gesture, proximity or hovering input from an electronic pen or a part of a body of the user. In this manner, the display 150 may obtain a user input to an application.

The alarm module 160 may provide a sound or vibration to the user. For example, the alarm module 160 may generate a sound or vibration alarm and may provide the alarm to the user, if the angular difference Δθ according to a rotation input corresponds to the angular difference range data Δθref or the rotation angle θ according to the rotation input corresponds to the angular range data θref or the angular data θref.

According to an embodiment of the present disclosure, if an application corresponding to a rotation input is activated, the alarm module 160 may generate a specified sound or a vibration with a specified pattern as an alarm and may provide the alarm to the user.

The communication circuit 170, for example, may set communications between the electronic device 100 and an external device (e.g., the electronic device 200). For example, the communication circuit 170 may communicate with the external device wirelessly or by wire.

The communication circuit 170 may include, for example, at least one of a Wi-Fi module, a Bluetooth module, or an NFC module and may also include a cellular module corresponding to at least one of LTE, LTE-A, CDMA, WCDMA, UMTS, WiBro, or GSM. In addition, according to an embodiment of the present disclosure, the communication circuit 170 may include a wired module for example at least one of universal serial bus (USB), recommended standard 232 (RS-232), or plain old telephone service (POTS).

For example, an execution command generated by the processor 120 may be transmitted to the external device via the communication circuit 170. The execution command may represent an execution command according to a function preset for each application. For example, if the music playback app (APP. 5) illustrated in FIG. 3A is activated in response to a predetermined rotation input, the processor 120 may transmit, to the electronic device 200, an execution command (e.g., a playback execution command on music stored in the electronic device 200) according to a preset function (e.g., a music playback function). In this way, the user may listen to the music stored in the electronic device 200 by manipulating (e.g., providing a rotation input to) the electronic device 100.

Although the electronic devices 100 and 200 have been described as different types of devices, the electronic devices 100 and 200 may be devices of the same type. According to various embodiments of the present disclosure, a portion or all of operations performed in the electronic device 100 may be performed in one or more other electronic devices (e.g., the electronic device 200).

According to an embodiment of the present disclosure, in the case where the electronic device 100 is required to perform a certain function or service automatically or in response to a request, the electronic device 100 may request another device (e.g., the electronic device 200) to perform at least a portion of functions related to the function or service, instead of or in addition to performing the function or service for itself. The electronic device 200 may then perform the requested function or additional function, and may transfer the result of the performance to the electronic device 100. The electronic device 100 may use the received result as is or additionally process the received result to provide the requested function or service.

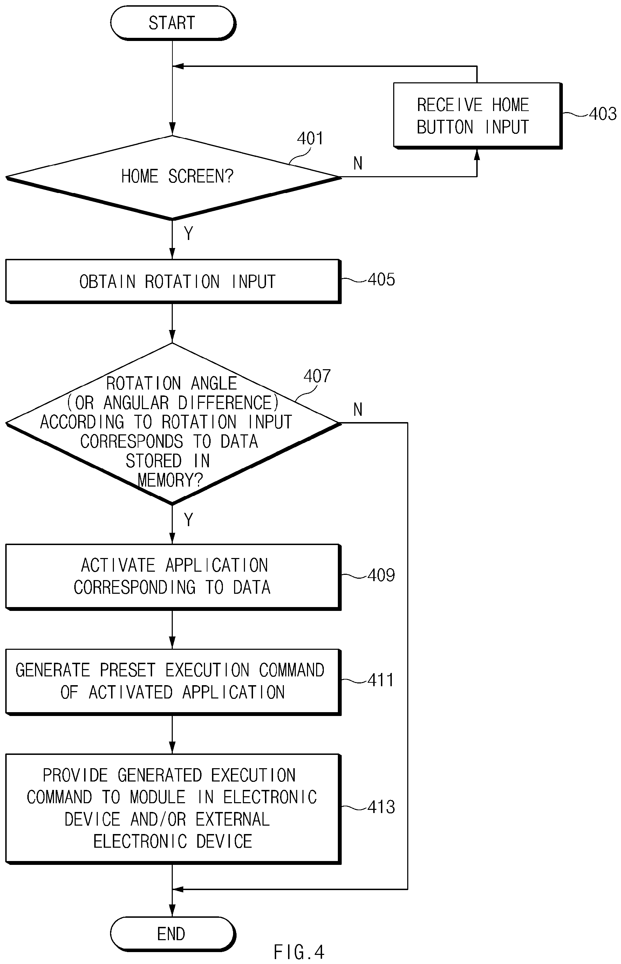

FIG. 4 illustrates a method of activating an application based on a rotation input according to an embodiment of the present disclosure.

In FIG. 4, the method of activating an application based on a rotation input according to an embodiment of the present disclosure may include operations 401 to 413.

In operation 401, (the processor 120 of) the electronic device 100 may determine whether a screen displayed on the display 150 is a home screen. If the screen displayed on the display 150 is the home screen, the process may proceed to operation 405, or, if the screen displayed on the display 150 is not the home screen, the process may proceed to operation 403.

In operation 403, the electronic device 100 may receive a home button input from the user. The home button input may correspond to a press on the button 105 (e.g., a crown-type button) illustrated in FIG. 1. According to an embodiment of the present disclosure, the home button input may correspond to quickly pressing twice (double clicking) the button 105 illustrated in FIG. 1.

In operation 405, the rotation input module 140 of the electronic device 100 may obtain a rotation input. The rotation input may be obtained as the rotation input module 140 (e.g., the bezel member 103) is rotated. According to an embodiment of the present disclosure, the rotation input may also be obtained by a motion of touching a certain portion on the display 150 and moving in an arc by a predetermined angle with respect to the surficial center of the display 150 (i.e., a touch move motion).

Furthermore, in operation 405 for obtaining a rotation input, the user may be provided with a discrete haptic feedback as the rotation input module 140 (e.g., the bezel member 103) is rotated. The user may recognize how many degrees the rotation input module 140 rotates through the discrete haptic feedback. The number of times the discrete haptic feedback is provided to the user may be preset based on data stored in the memory 130.

In operation 407, the processor 120 of the electronic device 100 may determine whether the angular difference Δθ according to the rotation input corresponds to the angular difference range data Δθref. Alternatively, the processor 120 of the electronic device 100 may determine whether the rotation angle θ according to the rotation input corresponds to the angular range data θref. Alternatively, the processor 120 of the electronic device 100 may determine whether the rotation angle θ according to the rotation input corresponds to the angular data θref.

If the angular difference Δθ according to the rotation input corresponds to the angular difference range data Δθref or the rotation angle θ according to the rotation input corresponds to the angular range data θref or the angular data θref, the process may proceed to operation 409. Here, the alarm module 160 of the electronic device 100 may generate a sound or vibration alarm to notify the user that an angular difference (or a rotation angle) for activating an application is reached.

If the angular difference Δθ according to the rotation input does not correspond to the angular difference range data Δθref, or the rotation angle θ according to the rotation input does not correspond to the angular range data θref or the angular data θref, the process may be ended. For example, this case may occur when a corresponding application does not exist since data corresponding to the angular difference Δθ or the rotation angle θ according to the obtained rotation input is not set in the memory 130.

In operation 409, the processor 120 of the electronic device 100 may activate an application according to the angular difference range data Δθref, the angular range data θref, or the angular data θref matched in operation 407. The application may be executed or activated in the electronic device 100 and/or the electronic device 200, and a screen caused by the activated application may be displayed on the display of the electronic device 100 and/or the electronic device 200. If the application is activated, the alarm module 160 of the electronic device 100 may generate a sound or vibration alarm to notify the user that the application is activated.

In operation 411, the processor 120 of the electronic device 100 may generate an execution command by an application activated in operation 409.

In operation 413, the processor 120 may transfer the execution command to another element in the electronic device 100 via the bus 110, or may transmit it to an external electronic device via the communication circuit 170.

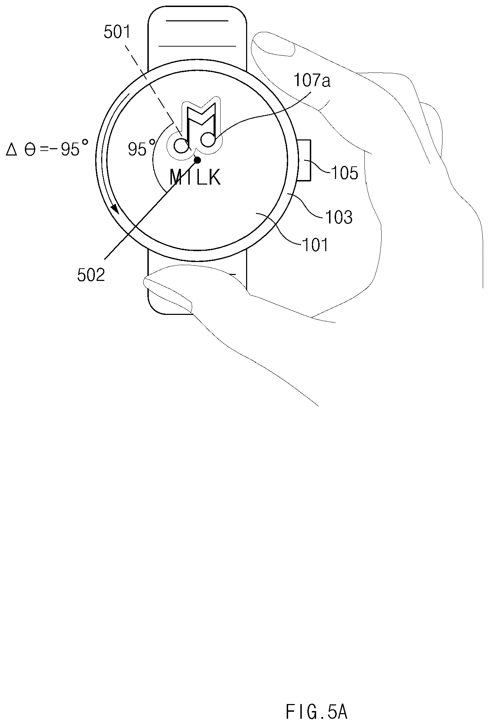

FIGS. 5A to 5C are diagrams for describing activation of an application according to an embodiment of the present disclosure.

Referring to FIG. 5A, the rotation input module 140 (e.g., a bezel member) may be rotated counterclockwise by 95° from position 501 to position 502 (i.e., Δθ = - 95°) according to an input. For example, if the angular difference range data Δθref_1 to Δθref_5 as illustrated in FIG. 3A are stored in the memory 130, the music playback app (APP. 5) may be activated since the angular difference Δθ according to the rotation input to the rotation input module 140 is -95°.

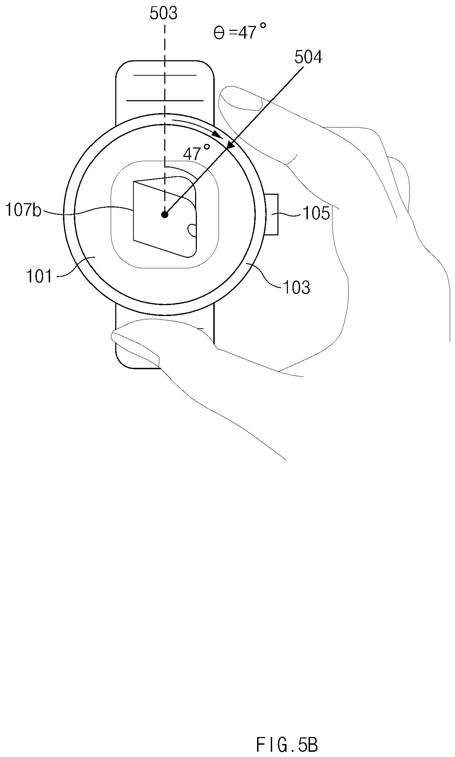

Referring to FIG. 5B, the rotation input module 140 (e.g., a bezel member) may be rotated clockwise by 47° from a orienting angle position 503 (0°) to position 504 (i.e., θ = 47°) according to an input. For example, if the angular range data Δθref_1 to Δθref_4 as illustrated in FIG. 3B are stored in the memory 130, the electronic wallet app (APP. 1) may be activated since the rotation angle θ according to the rotation input to the rotation input module 140 is 47°.

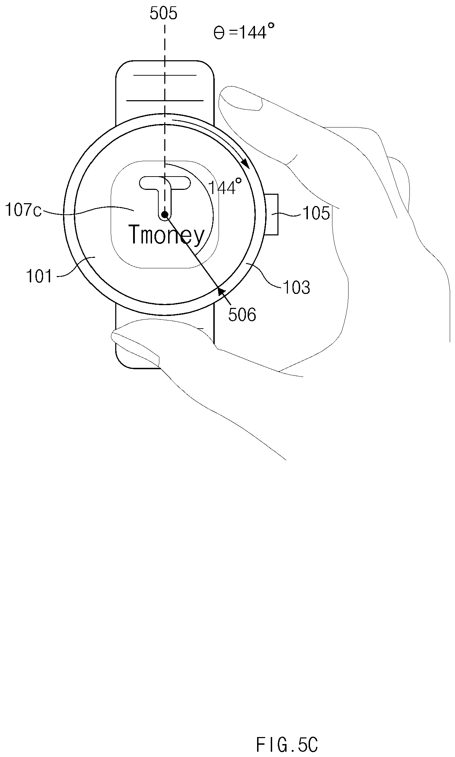

Referring to FIG. 5C, the rotation input module 140 (e.g., a bezel member) may be rotated clockwise by 144° from a orienting angle position 505 (0°) to position 506 (i.e., θ = 144°) according to an input. For example, if the angular data Δθref_1 to Δθref_4 as illustrated in FIG. 3C are stored in the memory 130, the transportation card app (APP. 2) may be activated since the rotation angle θ according to the rotation input to the rotation input module 140 is 144°.

Referring back to FIG. 4, as explained for operation 411, the processor 120 of the electronic device 100 may generate an execution command by an application activated in operation 409. The execution command may be preset as illustrated in FIG. 3A to 3C. Furthermore, the execution command may be generated automatically, or may be generated in response to a user input to an activated application.

For example, in the case of FIG. 5A, an execution command according to a music playback function may be generated in response to a touch input to an object 107a of the activated music playback app. In the case of FIG. 5B, an execution command according to an electronic payment function may be generated in response to a touch input to an object 107b of the activated electronic wallet app.

According to an electronic device according to various embodiments of the present disclosure, the user may activate various applications by providing a predetermined rotation input. Since the rotation input may be obtained through an additional user interface module (e.g., the bezel member 103, the button 105, etc.), the user may activate a desired application easily and intuitively without viewing a display of the electronic device.

Furthermore, according to an embodiment of the present disclosure, since the rotation input module may provide a haptic feedback upon obtaining a rotation input, the user may be intuitively aware of to what extent the rotation input rotates. Therefore, the user may accurately activate or switch to a desired application.

Furthermore, since an application activated according to an embodiment of the present disclosure may be an application suitable for a wearable device (e.g., an application using an NFC module), the user may be conveniently provided with a function of an application without additionally manipulating an external device (e.g., the electronic device 200 (which may be a smartphone), etc.).

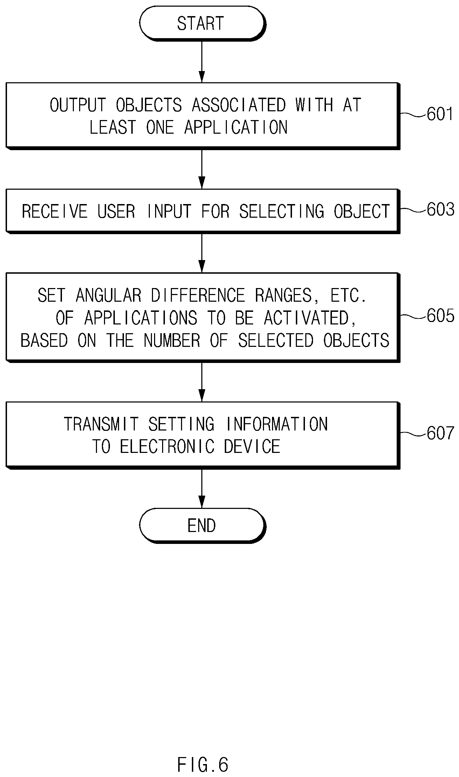

FIG. 6 illustrates a method of setting an application to be activated according to an embodiment of the present disclosure.

Referring to FIG. 6, the method of setting an application to be activated or executed based on a rotation input may include operations 601 to 607. Operations 601 to 607 may be performed in the electronic device 100 and/or the electronic device 200. However, the following description is provided on the assumption that operations 601 to 607 are performed in the electronic device 200 (e.g., which may be a smartphone as illustrated in FIG. 1).

In operation 601, the display of the electronic device 200 may output objects associated with at least one application. The objects may be icons representing the application(s). The application(s) may be an application executable in the electronic device 100 and/or an application executable through cooperation between the electronic device 100 and the electronic device 200.

In operation 603, the display of the electronic device 200 may receive from the user an input for selecting an object. The user may select a plurality of objects, and an order of selecting the plurality of objects may be considered. The selection(s) made and the order of selection may be displayed on the display.

In operation 605, a processor of the electronic device 200 may generate the angular difference range data Δθref, the angular range data θref, or the angular data θref for activating an application associated with objects selected in operation 603 based on the number of the selected objects.

For example, the angular difference range data Δθref or the angular range data θref corresponding to the application may be equally divided into ranges, the number of which is equal to the number of the objects selected in operation 603. Furthermore, the angular data θref corresponding to the application may be set based on the number of the objects selected in operation 603. For example, the angular data θref may be set based on a value obtained by dividing 360 degrees by the number of the objects selected in operation 603 or by dividing 360 degrees by a number obtained by adding '1' to the number of the objects selected in operation 603.

According to an embodiment of the present disclosure, the angular difference range data Δθref or the angular range data θref corresponding to each application may be divided by the number of the objects selected in operation 603 where each angular range is set according to a specified condition, and each angular range may not be necessarily equal. For example, the range of the angular difference range data Δθref or the angular range data θref corresponding to each application may be unequally set according to frequency of use. For example, an application with a high frequency of use may have the angular difference range data Δθref or the angular range data θref with a large range, and an application with a low frequency of use may have the angular difference range data Δθref or the angular range data θref with a small range.

In operation 607, the electronic device 200 may transmit to a second electronic device (e.g., the electronic device 100 illustrated in FIG. 1) various setting information resulting from operation 605 via a communication circuit. The second electronic device may receive and store the setting information in its built-in memory, and may perform the above-mentioned method of activating an application based on a rotation input.

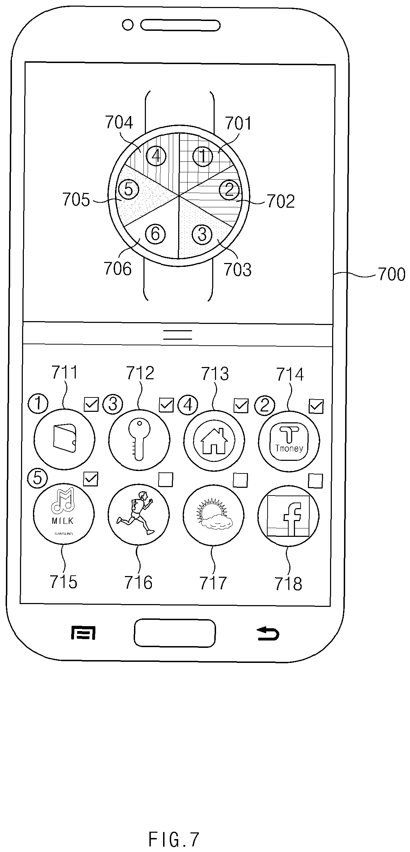

FIG. 7 illustrates a screen for setting an angular difference range according to an embodiment of the present disclosure.

Referring to FIG. 7, angular difference ranges 701 to 706 and objects 711 to 718 associated with applications may be displayed on a screen 700 in which an application to be activated is set according to an embodiment of the present disclosure.

The angular difference ranges 701 to 706 may be set equally to a predetermined angular range. Although the angular difference ranges 701 to 706 of FIG. 7 have the same angular range (60°), the number of angular difference ranges and their ranges may be adjusted according to the number of objects selected by the user. Furthermore, according to some various embodiments of the present disclosure, the angular difference ranges may be unequal in width.

The angular difference ranges 701 to 706 may be classified into an angular difference range corresponding to clockwise rotation and an angular difference range corresponding to counterclockwise rotation.

For example, the angular difference range 701 may represent a range of from 0° to 60°, the angular difference range 702 may represent a range of from 60° to 120°, and the angular difference range 703 may represent a range of from 120° to 180°. The angular difference range 704 may represent a range of from -60° to 0°, the angular difference range 705 may represent a range of from -120° to -60°, and the angular difference range 706 may represent a range of from -120° to -180°.

At least one object (e.g., an icon) to be matched to each angular difference range may be displayed on a lower portion of the screen 700. For example, the object 711 may represent an object for an electronic wallet app, the object 712 may represent an object for a car key app, and the object 713 may represent an object for a door lock app. The object 714 may represent an object for a transportation card app, the object 715 may represent an object for a music playback app, and the object 716 may represent an object for an exercise management app. The object 717 may represent an object for a weather information app, and the object 718 may represent an object for a Facebook app.

The user may select at least one of the objects 711 to 718 displayed on the screen 700. The user may select at least one of the objects 711 to 718 in order determined by the user. A checkbox disposed at an upper right end of the object of each application may indicate whether the object is selected, and a selection order of the object may be displayed as a number at an upper left end of the object.

For example, FIG. 7 illustrates the case where the object 711 for the electronic wallet app, the object 714 for the transportation card app, the object 712 for the car key app, the object 713 for the door lock app, and the object 715 for the music playback app are sequentially selected. The applications respectively associated with the selected objects may correspond to the angular difference ranges 701 to 705 corresponding to respective numbers 1 - 5.

The angular difference ranges 701 to 705 may constitute the angular difference range data Δθref in association with the applications of the selected objects 711, 714, 712, 713, and 715. The angular difference range data Δθref may be transmitted as setting information to another electronic device (e.g., the electronic device 100 illustrated in FIG. 1) (see FIG. 3A). Regarding the angular difference range 706 which does not correspond to any application, no application may be activated or executed even if a rotation input corresponding to the angular difference range 706 is obtained from the user.

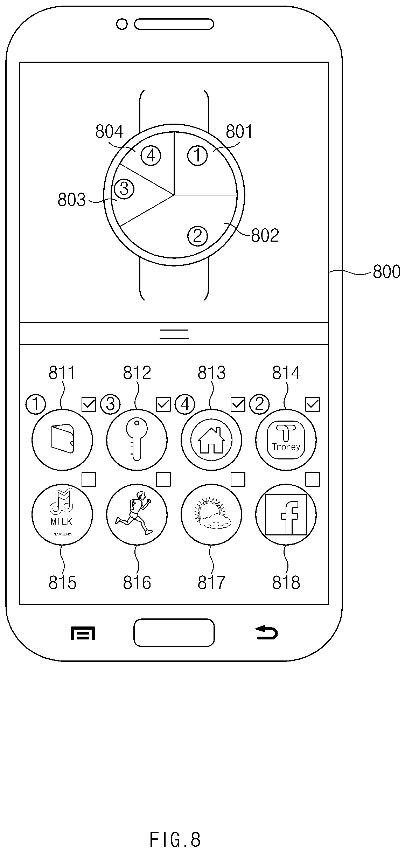

FIG. 8 illustrates a screen for setting an angular range according to an embodiment of the present disclosure.

Referring to FIG. 8, angular ranges 801 to 804 and objects 811 to 818 associated with applications may be included in a screen 800 in which an application to be activated is set according to an embodiment of the present disclosure. Since the objects 811 to 818 may respectively correspond to the objects 711 to 718 of FIG. 7, overlapping descriptions will not be provided.

The angular ranges 801 to 804 may have unequal angular ranges. Although the angular ranges 801 to 804 of FIG. 8 have unequal angular ranges in this example, the angular ranges 801 to 804 may have equal angular ranges according to some various embodiments of the present disclosure. Furthermore, the angular ranges 801 to 804 may represent ranges of angles increasing clockwise from 0°, or 12 o'clock direction with respect to a clock face.

For example, the angular range 801 may represent a range of from 0° to 90°, and the angular range 802 may represent a range of from 90° to 225°. The angular range 803 may represent a range of from 225° to 300°, and the angular range 804 may represent a range of from 300° to 360°. However, in various other examples, the angular ranges 801 to 804 may be ranges set by dividing a predetermined angle (e.g., 360°) by four to have equal ranges.

At least one object (e.g., an icon) to be matched to each angular range may be displayed on a lower portion of the screen 800. The user may select at least one of the objects 811 to 818 displayed on the lower portion of the screen 800. The user may select at least one of the objects 811 to 818 in order determined by the user.

For example, FIG. 8 illustrates the case where the object 811 for the electronic wallet app, the object 814 for the transportation card app, the object 812 for the car key app, and the object 813 for the door lock app are sequentially selected. The applications respectively associated with the selected objects may correspond to the angular ranges 801 to 804 corresponding to respective numbers 1 - 4.

The angular ranges 801 to 804 may constitute the angular range data θref in association with the applications of the selected objects 811, 814, 812, and 813. The angular range data θref may be transmitted as setting information to another electronic device (e.g., the electronic device 100 illustrated in FIG. 1) (see FIG. 3B).

According to an embodiment of the present disclosure, a rotation angle may be divided into angular ranges according to the number of objects selected by the user, and a divided angular range may be set according to a specified condition. For example, the specified condition may be a frequency of use of an application. In the case of FIG. 8, if the user selects the objects 811, 814, 812, and 813 in this order, the processor of the electronic device 200 may set an angular range of an application with a high frequency of use with a wide angular range, based on the frequencies of use of the applications corresponding to the objects. Therefore, regarding the screen 800, it may be understood in terms of frequency of use that the transportation app (angular range = 135°) is used most often, then the electronic wallet app (angular range = 90°), then the car key app (angular range = 75°), and then the door lock app (angular range = 60°).

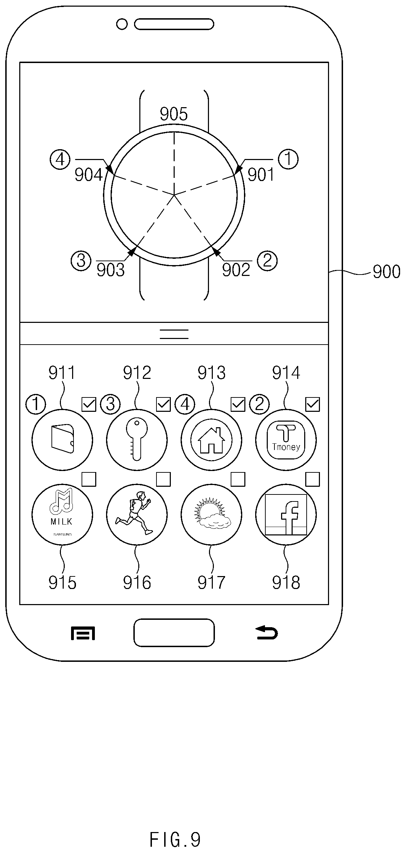

FIG. 9 illustrates a screen for setting a rotation angle according to an embodiment of the present disclosure.

Referring to FIG. 9, rotation angles 901 to 905 and objects 911 to 918 associated with applications may be included in a screen 900 in which an application to be activated is set according to an embodiment of the present disclosure. The rotation angles 901 to 904 may represent rotation angles increasing clockwise from a orienting angle 905 (12 o'clock direction, 0°). Since the objects 911 to 918 may respectively correspond to the objects 711 to 718 of FIG. 7, overlapping descriptions will not be provided.

At least one object (e.g., an icon) to be matched to each rotation angle may be displayed on a lower portion of the screen 900. The user may select at least one of the objects 911 to 918 displayed on the lower portion of the screen 900. The user may select at least one of the objects 911 to 918 in order determined by the user. For example, FIG. 9 illustrates the case where the object 911 for the electronic wallet app, the object 914 for the transportation card app, the object 912 for the car key app, and the object 913 for the door lock app are sequentially selected.

Rotation angles to be matched to applications may be set based on the number of objects selected by the user, and may be set at an equal interval. Furthermore, the rotation angles may be set to equal intervals as multiples of a value obtained by dividing 360 degrees by a value obtained by adding '1' to the number of selected applications.

For example, in the case of FIG. 9, since the user selects four applications, the rotation angles 901 to 905 may be set at an equal interval as multiples of 72° (=360/(4+1)). That is, the rotation angle 901 is 72°, the rotation angle 902 is 144°, the rotation angle 903 is 216° (or -144°), and the rotation angle 904 is 288° (or -72°). The orienting angle 905 is 0° (or 360°).

Applications respectively related to objects selected by the user may be set so as to correspond to the rotation angles. For example, the rotation angles 901 to 904 may be set to correspond to the applications of the selected objects 911, 914, 912, and 913. That is, the rotation angle 901 (i.e., 72°) may correspond to the electronic wallet app, the rotation angle 902 (i.e., 144°) may correspond to the transportation card app, the rotation angle 903 (i.e., 216°) may correspond to the car key app, and the rotation angle 904 (i.e., 288°) may correspond to the door lock app. No application may be set in association with the orienting angle 905 (0°). This is because the orienting angle indicates that no rotation input is received, i.e., a home screen is displayed.

The rotation angles set to correspond to the applications may constitute the angular data θref that may be transmitted as setting information to another electronic device (e.g., the electronic device 100 illustrated in FIG. 1) (see FIG. 3C).

According to some embodiments of the present disclosure, the user may select only three of the objects 911 to 918 according to preference. In this case, an upper portion of the screen 900 of the electronic device 100 may be divided into four rotation angles, i.e., 90°, 180°, 270°, and 360° (= 0°), at an interval of 90°. The rotation angles 90°, 180°, and 270° may be associated with applications in order of selecting the applications by the user. As a result, the rotation angles to be associated with the applications may be determined according to the number of applications selected by the user.

According to various embodiments of the present disclosure, the screens 700, 800, and 900 described above with reference to FIGS. 7 to 9 may be provided as guide information when a rotation input occurs. For example, in the case where a rotation input is obtained by the electronic device 100 (FIG. 1), the display 101 of the electronic device 100 may output, according to a setting state, guide information indicating which application is mapped to which rotation angle (or angular range) or angular difference (or angular difference range).

According to an embodiment of the present disclosure, if a plurality of apps has equal ranges, the screen 700 with app mapping described with reference to FIG. 7 may be output as the guide information. If a plurality of apps does not have equal ranges, the screen 800 with app mapping described with reference to FIG. 8 may be output as the guide information. By checking the guide information, the user may intuitively understand how large an angle or an angular difference the rotation input module should rotate with respect to a starting point in order to activate a desired app. Outputting the guide information may be skipped according to a setting.

According to a method of setting an application to be activated according to an embodiment of the present disclosure, the user may set according to preference thereof an application to be activated based on a rotation input. Furthermore, since an object of an application to be activated is displayed on a screen in association with a rotation angle (or an angular difference), more intuitive setting customizing is enabled.

The term "module" used herein may represent, for example, a unit including one of hardware, software and firmware or a combination thereof. The term "module" may be interchangeably used with the terms "unit," "logic," "logical block," "component" and "circuit." The "module" may be a minimum unit of an integrated component or may be a part thereof. The "module" may be a minimum unit for performing one or more functions or a part thereof. The "module" may be implemented mechanically or electronically. For example, the "module" may include at least one of an application-specific integrated circuit (ASIC) chip, a field-programmable gate array (FPGA), and a programmable-logic device for performing some operations, which are known or will be developed.

At least a part of devices (e.g., modules or functions thereof) or methods (e.g., operations) according to various embodiments of the present disclosure may be implemented as instructions stored in a computer-readable storage medium in the form of a program module. In the case where the instructions are executed by a processor (e.g., the processor 120), the processor may perform functions corresponding to the instructions. The computer-readable storage medium may be, for example, the memory 130.

A computer-readable recording medium may include a hard disk, a floppy disk, a magnetic medium (e.g., a magnetic tape), an optical medium (e.g., CD-ROM, DVD), a magneto-optical medium (e.g., a floptical disk), or a hardware device (e.g., ROM, RAM, flash memory, or the like). The program instructions may include machine language codes generated by compilers and high-level language codes that can be executed by computers using interpreters. The above-mentioned hardware device may be configured to be operated as one or more software modules for performing operations (e.g., the operations of FIG. 4 or 6) of various embodiments of the present disclosure and vice versa.

A module or a program module according to various embodiments of the present disclosure may include at least one of the above-mentioned elements, or some elements may be omitted or other additional elements may be added. Operations performed by the module, the program module or other elements according to various embodiments of the present disclosure may be performed in a sequential, parallel, iterative or heuristic way. Furthermore, some operations may be performed in another order or may be omitted, or other operations may be added.

According to an electronic device according to various embodiments of the present disclosure, the user may activate various applications by providing a predetermined rotation input. Since the rotation input may be obtained through an additional user interface module, the user may operate an application easily and intuitively without looking at the display of the electronic device.

The above embodiments of the present disclosure are illustrative and not limiting. Various alternatives and equivalents are possible. Other additions, subtractions, or modifications that are obvious in view of the present disclosure may fall within the scope of the appended claims.

## Claims

1. An electronic device comprising:
a memory configured to store angular range data for activating one of a plurality of applications based on a rotation input, wherein the angular range data are obtained by dividing a 360 angular range into angular ranges corresponding to each of the plurality of applications; and
a processor configured to activate said one of the plurality of applications if a rotation angle according to the rotation input corresponds to the angular range corresponding to said one of the plurality of applications; wherein the width of the angular range data for said one application is set according to a frequency of use of said one application.

2. The electronic device of claim 1, further comprising:
a display configured to display a screen caused by the application upon the application being activated; and
a rotation input module surrounding an outer perimeter of the display, the rotation input module being rotatable with respect to a surficial center of the display,
wherein the rotation input is obtained as the rotation input module is rotated.

3. The electronic device of claim 2,
wherein the rotation input module is able to provide a discrete haptic feedback to a user according to rotation of the rotation input module, and
wherein a number of times the discrete haptic feedback is provided is set based on the angular range data.

4. The electronic device of claim 1, wherein the processor generates an execution command caused by the application if a user input to the application is obtained when the application is activated.

5. The electronic device of claim 4, further comprising:
a communication circuit configured to communicate with an external electronic device,
wherein the execution command is transmitted to the external electronic device via the communication circuit.

6. A method for activating one of a plurality of applications based on a rotation input, the method comprising:
obtaining the rotation input; and
activating one of the plurality of applications if a rotation angle according to the rotation input corresponds to angular range data for activating said one of the plurality of applications; wherein the angular range data are obtained by dividing a 360 angular range into angular ranges corresponding to each of the plurality of applications and the width of the angular range data for said one application is set according to a frequency of use of said one application.

7. The method of claim 6, wherein the rotation input is obtained from a bezel member that is configured to be rotated.

8. The method of claim 7, wherein discrete haptic feedback is provided to a user as the user rotates the bezel member, and
wherein a number of times the discrete haptic feedback is provided is determined by the angular range data.

9. The method of claim 6, further comprising generating a sound or vibration as an alarm if the rotation angle according to the rotation input corresponds to the angular range data.

10. The method of claim 6, further comprising:
obtaining a user input to the application when it is activated; and
generating an execution command caused by the application according to the user input when the application is activated.

11. The method of claim 10, further comprising transmitting the execution command to another electronic device.

## Patentansprüche

1. Elektronisches Gerät, das umfasst:
einen Speicher, der zum Speichern von Winkelbereichsdaten zur Aktivierung einer Anwendung aus einer Mehrzahl von Anwendungen basierend auf einer Drehbewegungseingabe konfiguriert ist, wobei die Winkelbereichsdaten durch Dividieren eines 360-Grad-Winkelbereichs in Winkelbereiche entsprechend jeder aus der Mehrzahl von Anwendungen erhalten werden; und
einen Prozessor, der zum Aktivieren der einen Anwendung aus der Mehrzahl von Anwendungen konfiguriert ist, wenn ein Drehbewegungswinkel gemäß der Drehbewegungseingabe dem Winkelbereich entsprechend der einen Anwendung aus der Mehrzahl von Anwendungen entspricht;
wobei die Breite der Winkelbereichsdaten für die eine Anwendung gemäß einer Häufigkeit der Verwendung dieser einen Anwendung eingestellt wird.

2. Elektronisches Gerät gemäß Anspruch 1, das weiterhin umfasst:
eine Anzeige, die dazu konfiguriert ist, wenn die Anwendung aktiviert wird, einen durch die Anwendung veranlassten Bildschirm anzuzeigen; und
ein Drehbewegungseingabemodul, das einen äußeren Umfang der Anzeige umgibt, wobei das Drehbewegungseingabemodul in Bezug auf eine Mitte der Oberfläche der Anzeige drehbar ist,
wobei die Drehbewegungseingabe erhalten wird, indem das Drehbewegungseingabemodul gedreht wird.

3. Elektronisches Gerät gemäß Anspruch 2,
wobei das Drehbewegungseingabemodul einem Benutzer ein diskretes haptisches Feedback gemäß der Drehbewegung des Drehbewegungseingabemoduls bereitstellen kann, und
wobei die Anzahl, wie oft das diskrete haptische Feedback bereit gestellt wird, auf den Winkelbereichsdaten basiert.

4. Elektronisches Gerät gemäß Anspruch 1, wobei der Prozessor einen durch die Anwendung veranlassten Ausführungsbefehl erzeugt, wenn eine Benutzereingabe in die Anwendung erhalten wird, während die Anwendung aktiviert ist.

5. Elektronisches Gerät gemäß Anspruch 4, das weiterhin umfasst:
eine Kommunikationsschaltung, die dazu konfiguriert ist, mit einem externen elektronischen Gerät zu kommunizieren,
wobei der Ausführungsbefehl über die Kommunikationsschaltung an das externe elektronische Gerät übertragen wird.

6. Verfahren zur Aktivierung einer Anwendung aus einer Mehrzahl von Anwendungen basierend auf einer Drehbewegungseingabe, wobei das Verfahren umfasst:
Erhalten der Drehbewegungseingabe; und
Aktivieren einer der Anwendungen aus der Mehrzahl von Anwendungen, wenn ein Drehbewegungswinkel gemäß der Drehbewegungseingabe Winkelbereichsdaten zur Aktivierung der einen Anwendung aus der Mehrzahl von Anwendungen entspricht;
wobei die Winkelbereichsdaten durch Dividieren eines 360-Grad-Winkelbereichs in Winkelbereiche entsprechend jeder aus der Mehrzahl von Anwendungen erhalten werden, und
wobei die Breite der Winkelbereichsdaten für die eine Anwendung gemäß einer Häufigkeit der Verwendung dieser einen Anwendung eingestellt wird.

7. Verfahren gemäß Anspruch 6, wobei die Drehbewegungseingabe von einem Lünettenelement, das dazu konfiguriert ist, gedreht werden zu können, erhalten wird.

8. Verfahren gemäß Anspruch 7,
wobei dem Benutzer das diskrete haptische Feedback bereit gestellt wird, wenn der Benutzer das Lünettenelement dreht, und
wobei die Anzahl, wie oft das diskrete haptische Feedback bereit gestellt wird, durch die Winkelbereichsdaten bestimmt wird.

9. Verfahren gemäß Anspruch 6, das weiterhin umfasst: Erzeugen eines Tons oder einer Vibration als Alarm, wenn der Drehbewegungswinkel gemäß der Drehbewegungseingabe den Winkelbereichsdaten entspricht.

10. Verfahren gemäß Anspruch 6, das weiterhin umfasst:
Erhalten einer Benutzereingabe in die Anwendung, wenn diese aktiviert ist; und
Erzeugen eines Ausführungsbefehls, der gemäß der Benutzereingabe durch die Anwendung veranlasst wird, wenn die Anwendung aktiviert ist.

11. Verfahren gemäß Anspruch 10, das weiterhin umfasst: Übertragen des Ausführungsbefehls an ein weiteres elektronisches Gerät.

## Revendications

1. Appareil électronique comprenant :
une mémoire conçue pour stocker des données de plage angulaire en vue de l'activation d'une application parmi une pluralité d'applications en fonction d'une entrée par rotation, les données de plage angulaire étant obtenues par division d'une plage angulaire de 360 degrés en des plages angulaires correspondant à chacune des applications parmi la pluralité d'applications, et
un processeur conçu pour activer ladite une application parmi la pluralité d'applications si un angle de rotation conforme à l'entrée par rotation correspond à la plage angulaire correspondant à ladite une application parmi la pluralité d'applications ;
la largeur des données de plage angulaire relatives à ladite une application étant établie conformément à la fréquence d'utilisation de ladite une application.

2. Appareil électronique selon la revendication 1, comprenant en outre :
un écran conçu pour afficher un affichage fonction de l'application, lorsque l'application est activée, et
un module d'entrée par rotation entourant un périmètre extérieur de l'écran, le module d'entrée par rotation pouvant tourner par rapport au centre de la surface de l'écran ;
l'entrée par rotation étant obtenue par rotation du module d'entrée par rotation.

3. Appareil électronique selon la revendication 2, dans lequel le module d'entrée par rotation est apte à fournir une réaction haptique discrète à un utilisateur conformément à la rotation du module d'entrée par rotation, et
dans lequel le nombre de fois que la réaction haptique discrète est fournie est établi en fonction des données de plage angulaire.

4. Appareil électronique selon la revendication 1, dans lequel le processeur produit une commande d'exécution fonction de l'application s'il a été obtenu une entrée utilisateur vis-à-vis de l'application lorsque celle-ci est activée.

5. Appareil électronique selon la revendication 4, comprenant en outre :
un circuit de communication conçu pour communiquer avec un appareil électronique externe,
la commande d'exécution étant transmise à l'appareil électronique externe par le biais du circuit de communication.

6. Procédé d'activation d'une application parmi une pluralité d'applications en fonction d'une entrée par rotation, le procédé comprenant :
l'obtention de l'entrée par rotation, et
l'activation d'une application parmi la pluralité d'applications si un angle de rotation conforme à l'entrée par rotation correspond à des données de plage angulaire visant à activer ladite une application parmi la pluralité d'applications ;
lesdites données de plage angulaire étant obtenues par division d'une plage angulaire de 360 degrés en des plages angulaires correspondant à chacune des applications parmi la pluralité d'applications et la largeur des données de plage angulaire relatives à ladite une application est établie conformément à la fréquence d'utilisation de ladite une application.

7. Procédé selon la revendication 6, dans lequel l'entrée par rotation est obtenue par le biais d'un élément de cadran conçu pour tourner.

8. Procédé selon la revendication 7, dans lequel la réaction haptique discrète est fournie à un utilisateur tandis que celui-ci fait tourner l'élément de cadran, et
dans lequel le nombre de fois que la réaction haptique discrète est fournie est déterminé par les données de plage angulaire.

9. Procédé selon la revendication 6, comprenant en outre la production d'un son ou d'une vibration servant d'alarme si l'angle de rotation conforme à l'entrée par rotation correspond aux données de plage angulaire.

10. Procédé selon la revendication 6, comprenant en outre :
l'obtention d'une entrée utilisateur vis-à-vis de l'application lorsque celle-ci est activée, et
la production d'une commande d'exécution fonction de l'application conformément à l'entrée utilisateur lorsque l'application est activée.

11. Procédé selon la revendication 10, comprenant en outre la transmission de la commande d'exécution à un autre appareil électronique.
